# EUROPÄISCHE PATENTSCHRIFT

(11) **EP 0 547 293 B1**
(45) Veröffentlichungstag und Bekanntmachung des Hinweises auf die Patenterteilung: **30.08.1995**
(21) Anmeldenummer: 92113594.3
(22) Anmeldetag: 10.08.1992
(51) Int. Cl.: A01M 21/04

(54) **Gerät zur Beseitigung von Wildwuchs**
Apparatus to eliminate wild plants
Appareil pour éliminer les plantes sauvages

(30) Priorität: 14.12.1991 DE 4141322
(43) Veröffentlichungstag der Anmeldung: 23.06.1993
(73) Patentinhaber: Gloria-Werke H. Schulte-Frankenfeld GmbH & Co., D-59329 Wadersloh (DE)
(72) Erfinder: Schulte-Frankenfeld, Manfred, W-4830 Gütersloh 1 (DE)
(74) Vertreter: Elbertzhagen, Otto

(56) Entgegenhaltungen:
- FR-A- 2 586 339
- GB-A- 1 505 767

## Beschreibung

Die Erfindung bezieht sich auf ein Gerät zur Beseitigung von Wildwuchs mit einem am Unterende eines Stiels zur Handführung abgewinkelt angeordneten, nach unten hin abstrahlenden elektrischen Heizelement, das in einem Gehäuse angeordnet ist. Ein derartiges Gerät ist bereits aus der GB-A-1 505 767 bekannt.

Geräte der vorgenannten Art kommen zunehmend zum Einsatz, weil die Anwendung von chemischen Unkrautvernichtern für die Umwelt unverträglich ist. Die Vernichtung des Wildwuchses beruht bei derartigen Geräten auf einer Kurzzeitüberhitzung, wodurch das in den Pflanzen vorhandene Wasser verdampft und dabei die Pflanzenzellen aufsprengt. Danach verwelken die betreffenden Pflanzen und können entfernt werden.

In bekannter Ausführung haben Geräte der gattungsbildenden Art als Heizelement Gasheizkörper, die mit offener Flamme betrieben werden. Für viele potentielle Anwender im Hausgartenbereich kommt der Einsatz eines solchen Gerätes nicht in Frage, weil mit Gasbetrieb immer noch die Vorstellung einer Explosionsgefahr verbunden wird. Zwar ist man mit den bekannten, gasbetriebenen Geräten von einem Versorgungsnetz unabhängig, dafür muß jedoch von der Bedienungsperson noch eine Gasflasche für den Gasvorrat mitgeführt werden, was bei der Bedienung des handgeführten Gerätes lästig ist. Das liegt auch daran, daß der Gaszuleitungsschlauch von der Gasflasche zum Gerät hin sperrig ist und dessen Bewegungsfreiheit behindert. Weiter muß der Gasbrenner des Gerätes gezündet werden, dieser Vorgang ist ebenso wie der Betrieb des Gerätes windempfindlich, er kann also folglich nicht bei jeder Witterung ausgeführt werden. Das gilt hinsichtlich der Außentemperaturen auch dann, wenn als Brenngas Butan verwendet wird, das bei Temperaturen unter 10°C schlecht verdampft. Schließlich liegt ein weiterer Nachteil der bekannt en Geräte darin, nach Entleerung die Gasflasche entsorgen zu müssen, um dem Umweltschutz weiter Rechnung zu tragen.

Der Neuerung liegt nun die Aufgabe zugrunde, ein Gerät der gattungsbildenden Art zu schaffen, das elektrisch betrieben werden kann.

Diese Aufgabe wird bei einem Gerät zur Beseitigung von Wildwuchs der gattungsgemäßen Art dadurch gelöst, daß das Heizelement ein elektrischer Rohrheizkörper ist, der selbsttragend ausgeführt und darauf das Gehäuse, das entsprechend an der Unterseite offen ist, aufgesetzt ist, wobei er mit im wesentlichen in einer Ebene parallel zur Gehäuseunterseite liegenden Windungen in dem Gehäuse angeordnet ist, und dessen beide Endabschnitte aus dem Gehäuse herausgeführt und unter Bildung eines der Abwinklung zu dem Stiel hin entsprechenden Bogens in ein am Stiel sitzendes Kupplungsstück eingeführt sind.

Das erfindungsgemäße Gerät bietet den Vorteil einer sauberen problemlosen Handhabung, und es ist jederzeit betriebsbereit, sofern nur ein Anschluß an das elektrische Stromversorgungsnetz oder ein mobiles Stromversorgungsaggregat möglich ist. Ein solcher Anschluß kann heute leicht über Verlängerungskabel an jeder Stelle im Gartenbereich hergestellt werden. Das Mitschleppen der elektrischen Anschlußleitung bringt keine Schwierigkeiten mit sich, da solche Leitungen sehr flexibel sind. Das neue Gerät ist daher ähnlich wie ein elektrischer Rasentrimmer oder Rasenmäher zu handhaben. Es arbeitet windunempfindlich, weil eine offene Flamme nicht vorhanden. Bei Nichtgebrauch kann es problemlos weggestellt werden, das Schließen von Gasventilen und Abklemmen von Gasleitungen entfällt. In der Handhabung von elektrischen Anschlußleitungen und Schaltern sind auch Laien geübt, welche die elektrische Energie als saubere Energie schätzen. Die selbsttragende Ausbildung des Rohrheizkörpers mit dem darauf aufgesetzten Gehäuse macht den Aufbau des Gerätes besonders einfach, es kann somit kostengünstig hergestellt werden.

Um die Strahlungswirkung des elektrischen Rohrheizkörpers zu erhöhen, ist es von Vorteil, wenn das Gehäuse oberhalb des Rohrheizkörpers einen diesen überdeckenden Reflektor aufweist. Eine vorteilhafte Konstruktion besteht darin, den Reflektor an dem Rohrheizkörper zu befestigen und auf den Reflektor das Gehäuse aufzusetzen. Damit sich die Gehäuseoberseite nicht unzulässig erwärmt, ist es wichtig, zwischen dem Reflektor und der Wandung des Gehäuses Wärmeisolationsmaßnahmen zu treffen. So sind vorteilhaft in den Reflektor nach unten vorstehende Sicken eingeformt, über die die Reflektorfläche in Abstand von dem Rohrheizkörper gehalten ist, um eine lediglich punkt- oder linienförmige Abstützung des Reflektors auf dem Rohrheizkörper zu erzielen. Dadurch ist ein größerer Wärmewiderstand an den Kontaktstellen zwischen dem Rohrheizkörper und dem Reflektor gebildet. Des weiteren kann unmittelbar oberhalb des Reflektors ein Luftraum im Gehäuse angeordnet sein, in dessen Bereich in der Wandung des Gehäuses Luftzirkulationsöffnungen vorgesehen sind. Man erreicht durch den ständigen Luftaustausch in diesem Luftraum einen Kühleffekt. Um ferner einen Schutz gegen eine vollflächige Berührung der Oberseite des Gehäuses zu erzielen, können wir nach außen vorstehende Rippen in die Gehäusewandung eingeformt sein. Um eine unmittelbare Bestrahlung des Gehäuses zu vermeiden, kann weiterhin der Reflektor nach unten abgewinkelte, bis über die Ebene des Rohrheizkörpers nach unten hinausreichende Seitenwände haben, die in Abstand von darüber nach unten hinaus vorstehenden Seitenwandabschnitten des Gehäuses angeordnet sind.

In anderer vorteilhafter Ausgestaltung nach der Erfindung hat das Gehäuse eine unterhalb der Ebene des Rohrheizkörpers umlaufende, gerundete Kante, die durch einen nach außen umgebördelten Rand der Gehäusewandung gebildet ist. Damit sind scharfe Kanten an der Gehäuseunterseite vermieden und der umgebördelte Rand bietet weiter den Vorteil eines Berührungsschutzes dahingehend, daß man beispielsweise in Beeten zwischen empfindlichen Pflanzen arbeiten kann, die lediglich mit dem nach außen abstehenden Rand an der Gehäuseunterseite in Berührung kommen. Der außenliegende, durch die Umbördelung nach oben hochgezogene Gehäuserand ist kühler als die übrigen Gehäuseteile, außerdem schon die Kantenrundung die mit dem Gerät seitlich angefahrenen Pflanzen.

Ein Handhabungsvorteil ergibt sich, wenn das Gehäuse an seiner Unterseite beidseitige, in einer Richtung quer zum Stiel miteinander fluchtende Ausbuchtungen hat, die nach unten hin vorstehen. Diese Ausbuchtungen können in die unterseitig umlaufende Kante der Gehäusewandung in Gestalt eines stumpfwinkligen Knicks eingeformt sein. Zweckmäßig sind diese Ausbuchtungen von der Quermitte des Gerätes aus zum Stiel hin verlegt, so daß man das Gerät über die Ausbuchtungen aufsetzen kann, ohne daß ein dichter Abschluß zum Rohrheizkörper hin besteht. Man kann das Gerät leicht vornüber oder nach hinten über die Ausbuchtungen kippen, wodurch im Zusammenspiel mit dem nach außen umgebördelten Rand an der Gehäuseunterseite Gleitkufen oder -höcker gebildet sind, durch die ein Verhaken des Gerätes auf unebenem Untergrund insbesondere unterbunden ist.

In bevorzugter Ausführung hat das Gehäuse eine flach-rechteckige Grundform, wobei die Windungen des Rohrheizkörpers zu den Längskanten des Gehäuses parallele, über Halbkreisbögen verbundene Abschnitte haben. Damit kann das neue Gerät auch an unzugänglichen Stellen eingesetzt werden.

Der Aufbau des Gerätes vereinfacht sich dadurch, daß die Endabschnitte des Rohrheizkörpers aus dem Gehäuse herausgeführt und unter Bildung eines Bogens in das Kupplungsstück am Stiel des Gerätes eingeführt sind. Damit ist das gesamte Heizelement mit dem elektrischen Rohrheizkörper und dem ihn umschließenden Gehäuse über die Enden des Rohrheizkörpers selbst fest am Stiel des Gerätes angeordnet. Dabei ist es zweckmäßig, wenn bei der rechteckigen Grundform des Gehäuses die Endabschnitte des Rohrheizkörpers an einer der kürzeren Querseiten des Gehäuses herausgeführt sind.

Um eine störende Kabelanordnung außen am Gerät zu vermeiden, ist es von Vorteil, wenn der Stiel aus einem Rohr besteht, in welchem die im Kupplungsstück am Rohrheizkörper angeschlossenen Zuleitungen verlegt sind. Das Kupplungsstück erfüllt somit eine Doppelfunktion, indem es zum einen der mechanischen Halterung des Heizelementes und zum anderen dem elektrischen Anschluß des Rohrheizkörpers dient.

Vorteilhaft erhält der Stiel des Gerätes eine ergonomische Gestaltung, um die unterseitige Öffnung des Gehäuses mit dem Rohrheizkörper parallel über dem Boden leicht halten zu können. Hierbei ist am Oberende des Stiels ein Handgriff mit einem elektrischen Schalter angeordnet, zu dessen Betätigung am Handgriff eine Schalttaste vorsteht. Zweckmäßig ist diese Schalttaste nicht arretierbar, damit sich beim Loslassen das Gerät selbsttätig ausschaltet.

Das Gehäuse mit dem Rohrheizkörper und der Stiel stehen unter einem stumpfen Winkel zueinander, wobei es zweckmäßig ist, die dadurch bedingte Hebelwirkung am Stiel durch einen Zusatzhandgriff ausgleichen zu können, weshalb in vorteilhafter Weiterbildung nach der Erfindung unterhalb des Handgriffs am Stiel auf dessen zum abgewinkelten Gehäuse hin liegenden Vorderseite ein solcher Zusatzhandgriff vorstehend angeordnet ist.

Damit die elektrische Anschußleitung möglichst wenig bei der Betätigung des Gerätes stört, ist sie vorteilhaft an dem vom Zusatzhandgriff abgelegenen Ende aus dem Handgriff am Oberende des Stiels ausgeführt.

Die Erfindung wird nachfolgend anhand der Zeichnung an einem Ausführungsbeispiel noch näher erläutert. Dabei zeigen:
- Fig 1: in perspektivischer, schematischer Darstellung den unteren Be- reich eines Gerätes zur Beseitigung von Wildwuchs mit dem in einem Gehäuse angeordneten elektrischen Rohrheizkörper,
- Fig 2: einen Längsschnitt durch das Gehäuse am Unterende des Gerätes in einer einfacheren Ausführung,
- Fig 3: eine Seitansicht des gesamten Gerätes, wobei der Stiel nicht in voller Länge wiedergegeben ist,
- Fig 4: einen Längsschnitt durch das Gehäuse am Unterende des Gerätes in einer aufwendigeren Ausführung und
- Fig 5: eine Draufsicht auf das Gehäuse des Gerätes in der Ausführung nach Fig. 4.

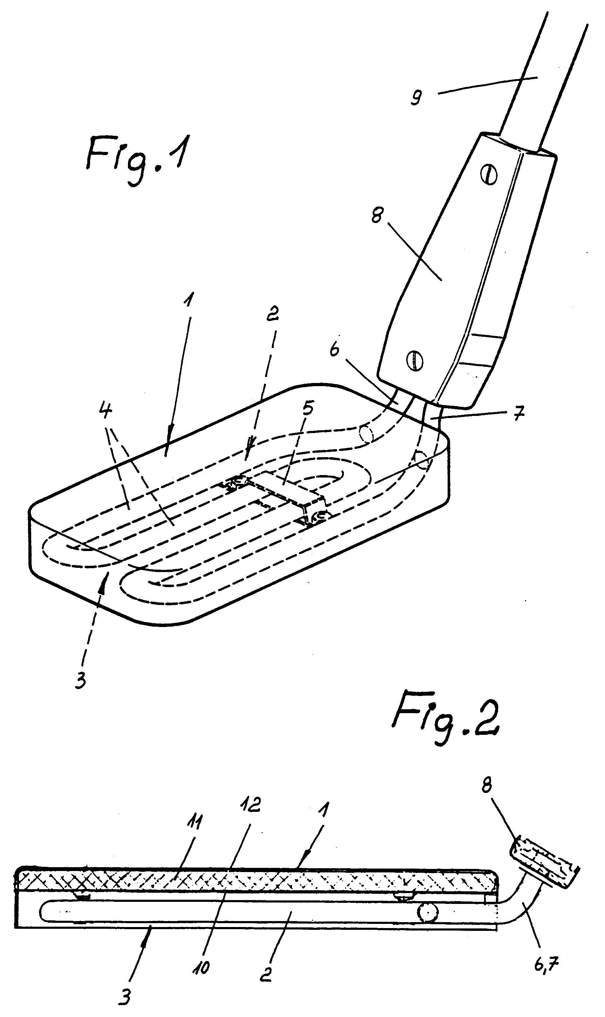

In der Phantomdarstellung von Fig 1 erkennt man ein Gehäuse 1, das eine flach-rechteckige Grundform hat. Die Unterseite 3 des Gehäuses 1 ist offen, oberseitig bis um die Schmalseiten herum hat das Gehäuse 1 eine geschlossene Wandung 12, wie aus Fig 2 ersichtlich ist. In dem Gehäuse 1 ist ein Rohrheizkörper 2 angeordnet, der in schlangenförmigen Windungen 4 verläuft, die in einer Ebene parallel zur Unterseite 3 des Gehäuses 1 liegen. Die Windungen 4 haben gerade Abschnitte, welche zu den Längskanten des Gehäuses 1 parallel sind und durch halbkreisförmige Bögen verbunden sind. Die Verbindung von Rohrheizkörper 2 und Gehäuse 1 erfolgt über geeignete Spangen 5 oder dergleichen, wobei der Rohrheizkörper 2 selbsttragend ist, und somit genaugenommen das Gehäuse 1 auf dem Rohrheizkörper 2 sitzt. Das Gehäuse 1 mit seiner Wandung 12 besteht zweckmäßig aus einem Edelstahlblech, welches auch bei Hitzebelastung korrosionsfrei ist, ohne Lackauftrag eine ansehnliche Optik hat und zudem sehr verschleißfest ist.

Das gesamte, aus dem Rohrheizkörper 2 und dem Gehäuse 1 bestehende Heizelement sitzt am Unterende eines Stiels 9, mit dem es einen stumpfen Winkel einschließt. Am Stiel 9 ist ein Kupplungsstück 8 angeordnet, welches sowohl der elektrischen als auch der mechanischen Verbindung dient, denn daran ist der Rohrheizkörper 2 aufgehängt. Dazu sind die beiden Enden 6 und 7 des Rohrheizkörpers 2 aus der rückwärtigen Schmalseite des Gehäuses 1 ausgeführt und bilden einen Boden entsprechend dem Winkel zwischen dem Gehäuse 1 und dem Stiel 9. Diese Enden 6 und 7 des Rohrheizkörpers 2 sind in dem Kupplungsstück 8 mechanisch fest aufgenommen und darin mit elektrischen Zuleitungen verbunden, die in dem Stiel 9 nach oben geführt werden, welcher dazu als Rohr ausgebildet ist. Die Enden 6 und 7 des Rohrheizkörpers 2 erhitzen sich beim Betrieb des Gerätes nicht, deshalb kann das Kupplungsstück 8 in Kunststoff ausgeführt sein.

Fig 2 zeigt weiter, wie das Gehäuse 1 auf den selbsttragenden Rohrheizkörper 2 aufgesetzt sein kann. Oberhalb des Rohrheizkörpers 2 ist in dem Gehäuse 1 ein Reflektor 10 angeordnet, der den Rohrheizkörper 2 vollständig überdeckt. Zwischen der Wandung 12 des Gehäuses 1 und dem Reflektor 10 liegt noch eine Wärmedämmschicht 11, die eine unzulässige Erwärmung der nach oben freien Kontaktflächen des Gehäuses 1 verhindert.

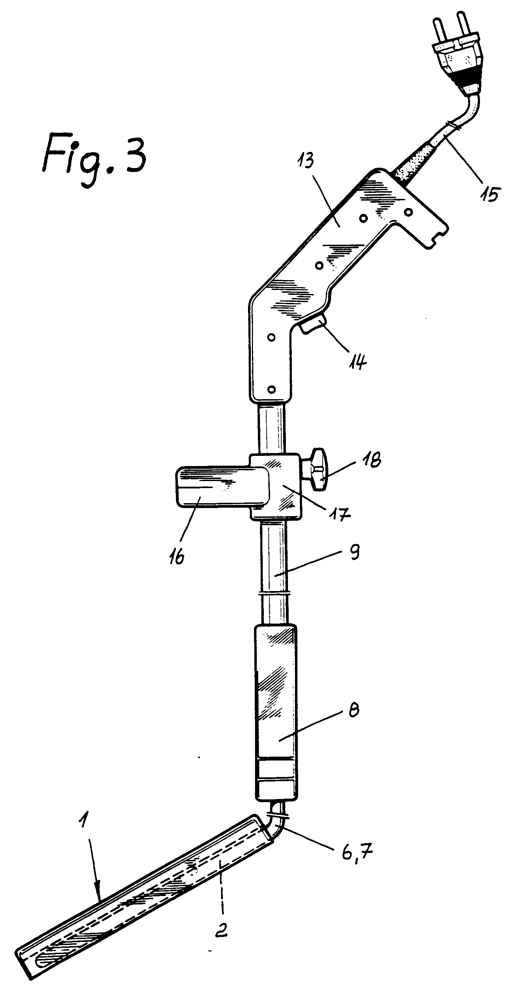

Fig 3 zeigt das komplette Gerät, und man erkennt hier, daß am Oberende des fest in das Kupplungsstück 8 eingesetzten Stiels 9 ein Handgriff 13 angeordnet ist, der ähnlich einem Pistolengriff gestaltet ist. An der Unterseite hat der Handgriff 13 eine Schalttaste 14, die Teil eines im Handgriff 13 eingebauten elektrischen Schalters 1 ist. Über diesen Schalter wird der untere Rohrheizkörper 2 ein- und ausgeschaltet, wobei die Taste 14 nicht arretierbar ist, damit beim Loslassen des Gerätes der Rohrheizkörper 2 stets abgeschaltet ist. Am oberen Ende des Handgriffs 13 ist eine elektrische Anschlußleitung 15 ausgeführt, die in üblicher Weise durch eine Kabeltülle geschützt und am freien Ende mit einem Anschlußstecker ausgestattet ist.

Der Handgriff 13 weist gegenüber dem Stiel 9 eine solche Neigung auf, daß das gesamte Gerät leicht mit dem Rohrheizkörper 2 bodenparallel gehalten werden kann, wozu weiter ein Zusatzhandgriff 16 vorgesehen ist, der unterhalb des Handgriffs 13 am Stiel 9 sitzt. Es handelt sich bei dem Zusatzhandgriff 16 um ein D-förmiges Gebilde, welches an der Vorderseite des Stiels 9 vorsteht und daran höhenverstellbar ist. Deshalb weist der Zusatzhandgriff 16 eine Rohrklemme 17 auf, die mit einer Feststellschraube 18 ausgestattet ist.

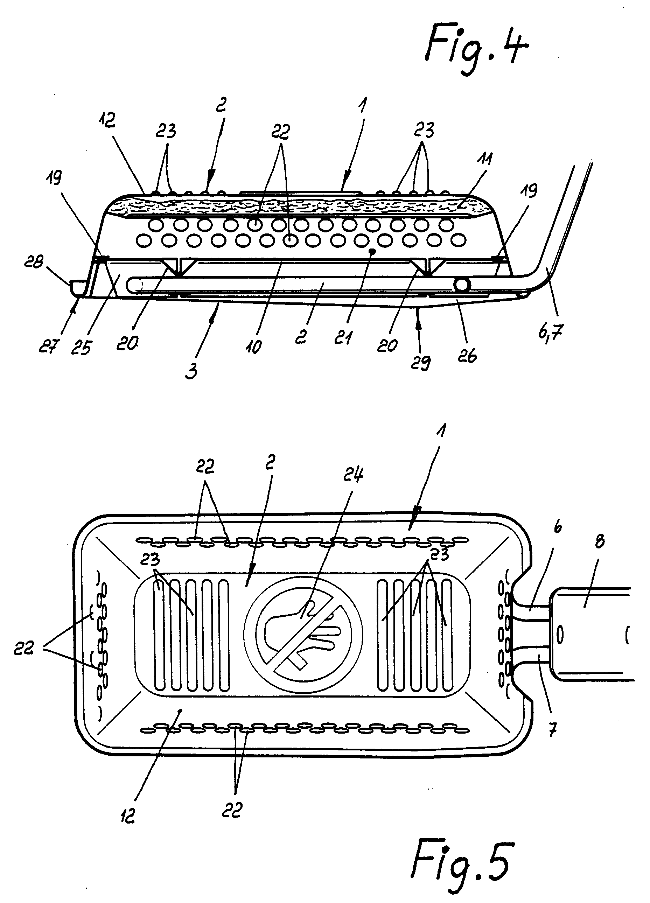

Die Fig. 4 und 5 zeigen eine konkrete Ausführungsform des Gerätes zur Wildwuchsbeseitigung mit elektrischer Beheizung. Das Gehäuse 1 ist hier mittelbar auf den Rohrheizkörper 2 aufgesetzt, indem es über randlich an der Innenseite der Gehäusewandung 12 umlaufende Stege 19 mit dem Reflektor 10 verbunden ist, der nach unten ausgebuchtete Sicken 20 hat. Mit diesen nach Art von Abstandshaltern ausgebildeten Sicken 20 sitzt der Reflektor 10 auf dem Rohrheizkörper 2, wobei die Sicken 20 an ihrer Unterseite punkt- oder linienförmig ausgebildet sind, um allzu große Wärmebrücken zwischen dem Rohrheizkörper 2 und dem Reflektor 10 zu vermeiden.

Unmittelbar oberhalb des Reflektors 10 ist im Innern des Gehäuses 1 ein Luftraum 21 vorgesehen, in welchem ein ständiger Luftaustausch über Luftzirkulationsöffnungen 22 stattfinden kann, die im Bereich des Luftraums 21 in der Gehäusewandung 12 angeordnet sind. Hierdurch wird eine Kühlung des Gerätes in demjenigen oberen Bereich des Gehäuses erzielt, der leicht berührt werden kann. Zusätzlich kann noch oberhalb des Luftraums 21 die bereits vorstehend beschriebene Wärmeisolationsschicht 11 angeordnet werden.

Für den menschlichen Körper ist die Wärmeempfindung besonders dann schmerzlich, wenn eine vollflächige Berührung einer erhitzten Fläche möglich ist. Um dies an der Oberseite 2 des Gehäuses 1 zu unterbinden, sind hier vorstehende Rippen 23 vorgesehen, die zudem noch die oberseitige Fläche des Gehäuses 1 vergrößern, was den Kühleffekt begünstigt. Zentral auf der Oberseite 2 des Gehäuses 1 findet sich ein Warnschild 24, welches signalisiert, daß ein Anfassen des erhitzten Gerätes zu vermeiden ist.

Eine weitere Maßnahme zur Vermeidung hoher Temperaturen im Bereich der Gehäusewandung 2 besteht in Seitenwänden 25 des Reflektors 10, die nach unten abgewinkelt sind und bis über die Ebene des Rohrheizkörpers 2 nach unten hinausreichen.

Sie sind in Abstand von Seitenwandabschnitten 26 des Gehäuses 1 angeordnet und bedingen somit eine wärmeisolierende Luftschicht zwischen sich und den Seitenwandabschnitten 26 des Gehäuses, die weiterhin nicht unmittelbar von dem Rohrheizkörper 2 bestrahlt werden können.

## Patentansprüche

1. Gerät zur Beseitigung von Wildwuchs mit einem am Unterende eines Stiels zur Handführung abgewinkelt angeordneten, nach unten hin abstrahlenden elektrischen Heizelelement, das in einem Gehäuse angeordnet ist,
dadurch gekennzeichnet,
daß das Heizelement ein elektrischer Rohrheizkörper (2) ist, der selbsttragend ausgeführt und darauf das Gehäuse (1), das entsprechend an der Unterseite offen ist, aufgesetzt ist, wobei er mit im wesentlichen in einer Ebene parallel zur Gehäuseunterseite liegenden Windungen (4) in dem Gehäuse (1) angeordnet ist, und dessen beide Endabschnitte (6,7) aus dem Gehäuse (1) herausgeführt und unter Bildung eines der Abwinklung zu dem Stiel (9) hin entsprechenden Bogens in ein am Stiel (9) sitzendes Kupplungsstück (8) eingeführt sind.

2. Gerät nach Anspruch 1,
dadurch gekennzeichnet,
daß das Gehäuse (1) oberhalb des Rohrheizkörpers (2) einen diesen überdeckenden Reflektor (10) aufweist.

3. Gerät nach Anspruch 2,
dadurch gekennzeichnet,
daß das Gehäuse (1) auf dem Reflektor (2) sitzt und in den Reflektor (10) nach unten vorstehende Sicken (20) eingeformt sind, über die die Reflektorfläche in Abstand von dem Rohrheizkörper (2) gehalten ist.

4. Gerät nach Anspruch 2 oder 3,
dadurch gekennzeichnet,
daß zwischen dem Reflektor (10) und der Wandung (12) des Gehäuses (1) eine Wärmeisolationsschicht (11) angeordnet ist.

5. Gerät nach einem der Ansprüche 2 - 4,
dadurch gekennzeichnet,
daß unmittelbar oberhalb des Reflektors (10) ein Luftraum (21) im Gehäuse (1) angeordnet ist.

6. Gerät nach Anspruch 5,
dadurch gekennzeichnet,
daß in der Wandung (12) des Gehäuses (1) im Bereich des Luftraums (21) Luftzirkulationsöffnungen (22) angeordnet sind.

7. Gerät nach einem der Ansprüche 1 - 6,
dadurch gekennzeichnet,
daß an der Oberseite (2) des Gehäuses (1) nach außen vorstehende Rippen (23) in die Gehäusewandung (12) eingeformt sind.

8. Gerät nach einem der Ansprüche 2 - 7,
dadurch gekennzeichnet,
daß der Reflektor (10) nach unten abgewinkelte, bis über die Ebene des Rohrheizkörpers (2) nach unten hinausreichende Seitenwände (25) hat, die in Abstand von darüber nach unten hinaus vorstehenden Seitenwandabschnitten (26) des Gehäuses (1) angeordnet sind.

9. Gerät nach einem der Ansprüche 1 - 8,
dadurch gekennzeichnet,
daß das Gehäuse (1) eine unterhalb der Ebene des Rohrheizkörpers (2) umlaufende, gerundete Kante (27) hat, die durch einen nach außen umgebördelten Rand (28) der Gehäusewandung (12) gebildet ist.

10. Gerät nach einem der Ansprüche 1 - 9,
dadurch gekennzeichnet,
daß das Gehäuse (1) an seiner Unterseite (3) beidseitige, in einer Richtung quer zum Stiel (9) miteinander fluchtende Ausbuchtungen (29) hat, die nach unten hin vorstehen.

11. Gerät nach Anspruch 9 und 10,
dadurch gekennzeichnet,
daß die Ausbuchtungen (29) in die unterseitig umlaufende Kante (27) der Gehäusewandung (12) in Gestalt eines stumpfwinkligen Knicks eingeformt sind.

12. Gerät nach einem der Ansprüche 1 - 11,
dadurch gekennzeichnet,
daß das Gehäuse (1) eine flach-rechteckige Grundform hat, wobei die Windungen (4) des Rohrheizkörpers (2) zu den Längsseiten des Gehäuses (1) parallele, über Halbkreisbögen verbundene Abschnitte haben.

13. Gerät nach Anspruch 12,
dadurch gekennzeichnet,
daß die Endabschnitte (6,7) des Rohrheizkörpers (2) an einer der kürzeren Querseiten des Gehäuses (1) herausgeführt sind.

14. Gerät nach einem der Ansprüche 1 - 13,
dadurch gekennzeichnet,
daß der Stiel (9) aus einem Rohr besteht, in welchem die im Kupplungsstück (8) angeschlossenen Zuleitungen verlegt sind.

15. Gerät nach einem der Ansprüche 1 - 14,
dadurch gekennzeichnet,
daß am Oberende des Stiels (9) ein Handgriff (13) mit einem elektrischen Schalter angeordnet ist, zu dessen Betätigung am Handgriff (13) eine Schalttaste (14) vorsteht.

16. Gerät nach Anspruch 15,
dadurch gekennzeichnet,
daß unterhalb des Handgriffs (13) am Stiel (9) auf dessen zum abgewinkelten Gehäuse (1) hin liegenden Vorderseite ein Zusatzhandgriff (16) vorstehend angeordnet ist.

17. Gerät nach Anspruch 15 oder 16,
dadurch gekennzeichnet,
daß eine elektrische Anschlußleitung (15) an dem vom Zusatzhandgriff (16) abgelegenen Ende aus dem Handgriff (13) ausgeführt ist.

## Claims

1. Apparatus for removing weeds with an electric downwardly radiating heating element which is mounted at an angle at the lower end of the handle shaft for manual guidance and is set in a housing,
characterised in that the heating element is an electric tubular heating body (2) which is designed to be self-supporting and on which is fitted the housing (1) which is open accordingly on the lower side wherein the heating body is mounted in the housing (1) with windings (4) lying substantially in a plane parallel to the underneath of the housing and wherein the two end sections (6,7) of the heating body emerge out of the housing (1) and are inserted in a coupling member (8) seated on the handle shaft (9) by forming a bend corresponding to the angle to the handle shaft (9).

2. Apparatus according to claim 1
characterised in that the housing (1) has above the tubular heating body (2) a reflector (10) covering same.

3. Apparatus according to claim 2
characterised in that the housing (1) is seated on the reflector (2) ((stet)) and downwardly protruding swages (20) are moulded into the reflector (10) so that the reflector surface is held at a distance from the tubular heating body (2).

4. Apparatus according to claim 2 or 3
characterised in that a heat insulating layer (11) is mounted between the reflector (10) and wall (12) of the housing (1).

5. Apparatus according to one of claims 2 - 4
characterised in that an air space (21) is arranged in the housing (1) directly above the reflector (10).

6. Apparatus according to claim 5
characterised in that air circulation openings (22) are arranged in the wall (12) of the housing (1) in the area of the air space (21).

7. Apparatus according to one of claims 1 - 6
characterised in that outwardly protruding ribs (23) are moulded into the housing wall (12) on the top side (2) of the housing (1).

8. Apparatus according to one of claims 2 - 7
characterised in that the reflector (10) has downwardly angled side walls (25) extending down over the plane of the tubular heating body (2) and set at a distance from the side wall sections (26) of the housing (1) protruding down over same.

9. Apparatus according to one of claims 1 - 8
characterised in that the housing (1) has a rounded edge (27) running round underneath the plane of the tubular heating body (2) and formed by an outwardly flanged edge (28) of the housing wall (12).

10. Apparatus according to one of claims 1 - 9
characterised in that the housing (1) has on its underneath (3) on each side outward bulges (29) which are aligned with each other in a direction across the handle shaft (9) and protrude downwards.

11. Apparatus according to claims 9 and 10
characterised in that the bulges (29) are moulded into the circumferential lower side edge (27) of the housing wall (12) in the form of an obtuse-angled bend.

12. Apparatus according to one of claims 1 - 11
characterised in that the housing (1) has a flat rectangular basic shape wherein the windings (4) of the tubular heating body (2) have sections parallel to the longitudinal sides of the housing (1) and connected through semi-circular curves.

13. Apparatus according to claim 12
characterised in that the end sections (6,7) of the tubular heating body (2) emerge at one of the shorter cross sides of the housing (1).

14. Apparatus according to one of claims 1 - 13
characterised in that the handle shaft (9) consists of a tube in which the supply leads are placed connected to the coupling member (8).

15. Apparatus according to one of claims 1 - 14
characterised in that at the top end of the handle shaft (9) there is a handle (13) with an electric switch which is operated by a switch button (14) protruding on the handle (13).

16. Apparatus according to claim 15
characterised in that underneath the handle (13) on the handle shaft (9) there is an additional handle (16) protruding on the front side lying towards the angled housing (1).

17. Apparatus according to claim 15 or 16
characterised in that an electric connection lead (15) is extended from the handle (13) at the end remote from the additional handle (16).

## Revendications

1. Appareil pour éliminer les plantes sauvages avec un élément de chauffage électrique rayonnant vers le bas, monté, coudé, a l'extrémité inférieure d'un manche pour être guidé à la main, lequel élément est disposé dans un carter,
caractérisé en ce que
l'élément de chauffage est un radiateur tubulaire (2) autoportant et que le carter (1) , ouvert adéquatement à la partie inférieur, est posé, le radiateur tubulaire êtant disposé, dans la carter, essentiellement en sinuosités (4) sur un plan parallèle à la partie inférieur du carter, et que ses deux extrémités (6, 7), sortant du carter (1) en formant un arc correspondant à la partie coudée vers le manche (9), sont introduites dans une pièce d'accouplement (8) placée sur le manche (9).

2. Appareil selon la revendication 1,
caractérisé en ce que
le carter (1) présente, au-dessus du corps de chauffage tubulaire (2) un réflecteur recouvrant celui-ci.

3. Appareil selon la revendication 2,
caractérisé en ce que
le carter (1) repose sur le réflecteur (2) et que des des moulures (20) en saillie vers le bas sont formées dans le réflecteur (10), moulures (20) par l'intermédiaire desquelles la surface du réflecteur est maintenue a distance du corps de chauffage tubulaire (2).

4. Appareil selon la revendication 2 ou 3,
caractérisé en ce que
une couche d'isolation thermique (11) est disposée entre le réflecteur (10) et la paroi (12) du carter (1).

5. Appareil selon l'une des revendications 2 a 4,
caractérisé en ce que,
directement au-dessus du réflecteur (10) un espace d'air (21) est prévu dans le carter (1).

6. Appareil selon la revendication 5,
caractérisé en ce que
des ouvertures de circulation d'air (22) sont disposées dans la zone de l'espace d'air (21).

7. Appareil selon l'une des revendications 1 à 6,
caractérisé en ce que
des nervures en saillie vers l'extérieur sont formée à partir de la paroi (12), du côté supérieur (2) du carter (1).

8. Appareil selon l'une des rvendications 2 à 7,
caractérisé en ce que
le réflecteur (10) présente des parois latérales (25) coudées vers le bas et s'étendant jusqu'au niveau du corps de chauffage tubulaire (2), lesquelles parois latérales (25) sont disposées à distance de secteurs (26) de parois latérales en saillie vers le bas.

9. Appareil selon l'une des revendications 1 à 8,
caractérisé en ce que
le carter (1) présente un bord (27) arrondi, s'étendant en continu au-dessous du niveau du corps de chauffage tubulaire (2), ce bord étant formé par bord (28) de la paroi (12) du carter rabattu vers l'extérieur.

10. Appareil selon l'une des revendication 1 à 9,
caractérisé en ce que
la surface inférieure (3) du carter (1) présente des courbures (29) bilatérales, en alignement par rapport l'une à l'autre transversalement au manche (9), lesquelles sont en saillie vers le bas.

11. Appareil selon les revendications 9 et 10,
caractérsié en ce que
les courbures (29) sont formées, sous forme de coude à angle obtus, dans le bord continu, inférieur (27) de la paroi (12) du carter (1).

12. Appareil selon l'une des revendications 1 à 11,
caractérisé en ce que le carter (1) a une forme de base plate, rectangulaire, les sinuosités (4) du corps de chauffage tubulaire (2) présentant des secteurs parallèles aux côtés longitudinaux du carter (1) et reliés par des arcs en demi-cercle.

13. Appareil selon la revendication 12,
caractérisé en ce que
les extrémités (6, 7) du corps de chauffage tubulaire (2) sont conduits à l'un des côtés transversaux plus courts du carter (1).

14. Appareil selon l'une des revendications 1 à 13,
caractérisé en ce que le manche (9) consiste en un tube dans lequel les conduites d'alimentation, raccordées dans la pièce d'accouplement (8), sont posées.

15. Appareil selon l'une des revendication 1 à 14,
caractérisé en ce que
une poignée (13) est prévue à l'extrémité supérieure du manche (9) avec un commutateur électrique actionné à l'aide d'une touche (14) équipant la poignée.

16. Appareil selon la revendication 15,
caractérisé en ce que
le manche (9) est équipé, sur son côté antérieur dirigé vers le carter(1) coudé, au-dessous de la poignée (13) d'une poignée supplémentaire (16) en saillie.

17. Appareil selon la revendication 15 ou 16,
caractérisé en ce que
la conduite de raccordement électrique (15) est conduite hors de la poignée (13) à l'extrémité la plus éloignée de la poignée supplémentaire (16).
